# EUROPÄISCHE PATENTSCHRIFT

(11) **EP 4 596 900 B1**
(45) Veröffentlichungstag und Bekanntmachung des Hinweises auf die Patenterteilung: **03.06.2026**
(21) Anmeldenummer: 25154677.6
(22) Anmeldetag: 29.01.2025
(51) Int. Cl.: F16B 13/06

(54) **SPREIZDÜBEL**
EXPANSION DOWEL
CHEVILLE À EXPANSION

(30) Priorität: 04.02.2024 DE 102024103059; 09.08.2024 DE 102024122839; 07.01.2025 DE 102025100184
(43) Veröffentlichungstag der Anmeldung: 06.08.2025
(73) Patentinhaber: fischerwerke GmbH & Co. KG, 72178 Waldachtal (DE)
(72) Erfinder: Daly, Aaron, 72285 Pfalzgrafenweiler (DE)
(74) Vertreter: Suchy, Ulrich Johannes

(56) Entgegenhaltungen:
- EP-B1- 3 477 126

## Beschreibung

Die Erfindung betrifft einen Spreizdübel mit den Merkmalen des Oberbegriffs des Anspruchs 1.

Aus der Europäischen Patentschrift EP 3 477 126 B1 ist ein Metall-Kunststoff-Spreizdübel bekannt, der ein hohlbolzenförmiges Innenteil aus Kunststoff und eine das Innenteil umschließende Metallhülse aufweist. Der Spreizdübel weist vorne einen Spreizkonus mit einem Innengewinde auf, der durch Einschrauben einer Spreizschraube in die Metallhülse eingezogen wird und das Innenteil axial staucht. Beim Stauchen knicken in einem Hohlräume aufweisenden Baustoff vier Spreizschenkel des Innenteils kniehebelartig radial nach außen und bilden eine Art Widerhaken, die den Spreizdübel durch Hintergriff in einem Hohlraum des Baustoffs halten. Jeweils zwischen den Spreizschenkeln des Innenteils weist die Metallhülse des bekannten Spreizdübels kragarmförmige Spreizschenkel auf, die der Spreizkonus radial nach außen drückt, das heißt "aufspreizt", wenn er zwischen die Spreizschenkel eingezogen wird. In einem Vollbaustoff verankern die aufgespreizten Spreizschenkel der Metallhülse den Spreizdübel durch Formschluss und oder Kraftschluss.

Aufgabe der Erfindung ist, einen Spreizdübel mit mindestens einem Spreizschenkel aus Kunststoff und mindestens einem Spreizschenkel aus Metall vorzuschlagen, der ein verbessertes Spreizverhalten aufweist.

Diese Aufgabe wird erfindungsgemäß durch einen Spreizdübel mit den Merkmalen des Anspruchs 1 gelöst.

Der erfindungsgemäße Spreizdübel mit den Merkmalen des Anspruchs 1 weist mindestens einen ersten, sich in einer Längsrichtung des Spreizdübels erstreckenden Spreizschenkel aus Kunststoff und mindestens einen zweiten, sich in der Längsrichtung des Spreizdübels erstreckenden Spreizschenkel aus Metall auf. Die Längsrichtung erstreckt sich parallel zu einer Längsachse des Spreizdübels, wobei sich die Spreizschenkel auch schräg in einem spitzen Winkel zu der Längsachse des Spreizdübels, das heißt mit einer Komponente in der Längsrichtung des Spreizdübels erstrecken können. In nicht aufgespreiztem Zustand erstrecken sich die Spreizschenkel vorzugsweise parallel zur Längsachse des Spreizdübels oder in einem Winkel von nicht mehr als 10°, 12° oder 15° zur Längsachse beziehungsweise zur Längsrichtung des Spreizdübels. Die Spreizschenkel weisen eine Länge auf, die mindestens dem Doppelten des Nenndurchmessers des Spreizdübels entspricht, insbesondere eine Länge, die mindestens dem 2,5-Fachen und insbesondere mindestens dem Dreifachen des Nenndurchmessers des Spreizdübels entspricht.

Insbesondere weist der erfindungsgemäße Spreizdübel zwei erste Spreizschenkel und/oder zwei zweite Spreizschenkel auf, die sich in Bezug auf die Längsachse des Spreizdübels jeweils einander gegenüber angeordnet sind. Auch mehr als zwei erste Spreizschenkel und/oder mehr als zwei zweite Spreizschenkel, die gleichmäßig oder ungleichmäßig über einen Umfang des Spreizdübels verteilt angeordnet sind, sind möglich.

Zum Aufspreizen werden die Spreizschenkel des erfindungsgemäßen Spreizdübels durch Einbringen eines vorzugsweise stiftförmigen Spreizelements, wie beispielsweise einer Schraube oder eines Nagels, entlang der Längsachse in den Spreizdübel von der Längsachse weg radial nach außen oder jedenfalls mit einer Komponente radial nach außen beaufschlagt. Beim Aufspreizen werden die Spreizschenkel beispielsweise um eine zum Spreizdübel beziehungsweise zur Längsachse des Spreizdübels tangentiale Schwenkachse an einem Ende des jeweiligen Spreizschenkels nach außen geschwenkt oder beispielsweise auch insgesamt über ihre Länge, beispielsweise achsparallel von der Längsachse des Spreizdübels weg nach außen beaufschlagt. Das Beaufschlagen der Spreizschenkel von der Längsachse des Spreizdübels weg nach außen kann als Aufspreizen der Spreizschenkel und als Aufspreizen des Spreizdübels aufgefasst werden, dessen Außendurchmesser sich beim Aufspreizen im Bereich der Spreizschenkel vergrößert.

Erfindungsgemäß ist der mindestens eine zweite Spreizschenkel aus Metall in einer Umfangsrichtung zur Längsachse des Spreizdübels flacher, das heiß dünner, als er in radialer Richtung zur Längsachse des Spreizdübels breit ist. Der mindestens eine zweite Spreizschenkel aus Metall ist dadurch ein der Umfangsrichtung des Spreizdübels weniger stabil als radial zum Spreizdübel. Das ermöglicht außer dem Aufspreizen radial oder mit einer Komponente radial weg von der Längsachse auch ein Stauchen, das heißt ein Verkürzen des mindestens einen Spreizschenkels aus Metall in der Längsrichtung des Spreizdübels. Insbesondere dreht sich während des Stauchens ein Ende des mindestens einen zweiten Spreizschenkels aus Metall bezüglich eines anderen Endes des mindestens einen zweiten Spreizschenkels aus Metall in der Umfangsrichtung um die Längsachse des Spreizdübels, wodurch sich der mindestens eine zweite Spreizschenkel um die Längsachse des Spreizdübels windet. Insbesondere bildet der mindestens eine zweite Spreizschenkel aus Metall - insbesondere zusammen mit dem mindestens einen ersten Spreizschenkel aus Kunststoff und gegebenenfalls weiteren ersten und/oder zweiten Spreizschenkeln - eine Art Knoten. Diese Knotenbildung, die insbesondere in einem Hohlraum eines Baustoffs stattfindet, kann ebenfalls als eine Art des Aufspreizens des erfindungsgemäßen Spreizdübels aufgefasst werden. Gegenüber dem aus dem Stand der Technik bekannten Ausknicken hat ein Verknoten den Vorteil, dass sich die aufgespreizten Spreizschenkel besser an Flächen anpassen, die einen Hohlraum begrenzen, beispielsweise an der Rückseite eines Plattenbaustoffs, wie beispielsweise einer Gipskartonplatte, oder hinter einem Steg in einem Hochlochziegel.

Die abhängigen Ansprüche haben vorteilhafte Ausgestaltungen und Weiterbildungen der im Anspruch 1 angegebenen Erfindung zum Gegenstand.

In der radialen Richtung zur Längsachse des Spreizdübels ist der mindestens eine zweite Spreizschenkel aus Metall bei Ausführungen der Erfindung mindestens 1,5-mal, insbesondere mindestens 1,7-mal und vorzugsweise mindestens 2-mal so breit wie er in der Umfangsrichtung des Spreizdübels dick ist.

Eine bevorzugte Ausführung der Erfindung sieht ein Schraubeneingriffelement an einem vorderen Längsende des mindestens einen zweiten Spreizschenkels aus Metall vor. Das vordere Längsende ist ein einem vorderen Ende des Spreizdübels nahes Ende des mindestens einen zweiten Spreizschenkels. Als "vorderes Ende" des Spreizdübels wird hier das Ende des Spreizdübels bezeichnet, mit dem voran der Spreizdübel in ein Ankerloch in einem Baustoff oder allgemein in einem Ankergrund eingebracht wird. Das Schraubeneingriffelement weist beispielsweise ein Innengewinde beziehungsweise ein Mutterngewinde oder einen Umfangsabschnitt eines Innengewindes beziehungsweise Mutterngewindes mit einem oder mehreren Gewindegängen des Innengewindes beziehungsweise des Mutterngewindes für einen Eingriff mit einem Schraubengewinde einer Spreizschraube auf, die als stiftförmiges Spreizelement entlang der Längsachse des Spreizdübels in den Spreizdübel eingebracht wird. Das Schraubeneingriffelement am vorderen Längsende des mindestens einen zweiten Spreizschenkels aus Metall muss keine Steigung aufweisen, sondern seine Form und Anordnung müssen für den Eingriff mit dem Schraubengewinde der Spreizschraube geeignet sein. Liegt die Spreizschraube beispielsweise mit ihrem Kopf am hinteren Ende des Spreizdübels an, so bewegt bei einer Drehung der Spreizschraube die Spreizschraube aufgrund des Eingriffs ihres Schraubengewindes mit dem Schraubeneingriffelement am vorderen Längsende des mindestens einen zweiten Spreizschenkels aus Metall das vordere Längsende des mindestens einen zweiten Spreizschenkels in Richtung eines hinteren Längsendes des mindestens einen zweiten Spreizschenkels aus Metall. Dadurch wird der mindestens eine zweite Spreizschenkel aus Metall in der Längsrichtung des Spreizdübels verkürzt, das heißt gestaucht beziehungsweise um die Längsachse verdreht, wobei der Spreizdübel aufspreizt.

Eine Ausgestaltung der Erfindung sieht zwei oder mehr zweite Spreizschenkel aus Metall vor, deren vordere und/oder hintere Längsenden miteinander verbunden sind. Insbesondere sind zumindest die vorderen Längsenden miteinander verbunden, derart, dass die vorderen Längsenden der zweiten Spreizschenkel gemeinsam in der Längsrichtung des Spreizdübels bewegt und die zweiten Spreizschenkel gemeinsam gestaucht werden können.

Vorzugsweise sind die vorderen Längsenden der zweiten Spreizschenkel aus Metall durch das Schraubeneingriffelement miteinander verbunden. Eine bevorzugte Ausführungsform der Erfindung sieht vor, dass die zweiten Spreizschenkel aus Metall Stege an ihren vorderen Längsenden aufweisen, die sich als Schraubeneingriffelemente für den Eingriff mit dem Schraubengewinde der Spreizschraube bogenförmig - mit oder ohne Steigung - um die Längsachse des Spreizdübels herum erstrecken.

Eine Ausgestaltung der Erfindung sieht ein Blechbiegeteil vor, das den mindestens einen zweiten Spreizschenkel aus Metall aufweist. Der oder die zweiten Spreizschenkel können beispielsweise durch Stanzen, Laserschneiden oder ein anderes Verfahren aus dem Blech getrennt sein.

Zu einer Verbesserung einer Verankerung des erfindungsgemäßen Spreizdübels in einem Ankerloch in einem Baustoff oder allgemein in einem Ankergrund weist der mindestens eine zweite Spreizschenkel aus Metall bei Ausführungen der Erfindung Widerhaken an einem radial äußeren, das heißt der Längsachse des Spreizdübels fernen Längsrand auf. Die Verankerung ist ein Halt des Spreizdübels, insbesondere des aufgespreizten Spreizdübels gegen Herausziehen aus dem Ankerloch.

Für einen Eingriff mit dem Schraubengewinde der Spreizschraube sieht eine Ausgestaltung der Erfindung eine zahnstangenartige Kontur an einem inneren, das heißt der Längsachse des Spreizdübels zugewandten Längsrand des mindestens einen zweiten Spreizschenkels aus Metall vor.

Um den mindestens einen ersten Spreizschenkel aus Kunststoff leichter aufspreizen zu können, weist er bei Ausführungen der Erfindung Aussparungen, Hohlräume, Vertiefungen, Durchbrechungen oder dergleichen auf, die seine Steifigkeit gegen Biegen und Knicken und/oder gegen Tordieren verringert. Mit "Tordieren" ist das oben für den mindestens einen zweiten Spreizschenkel aus Metall beschriebene Winden des mindestens einen ersten Spreizschenkels aus Kunststoff um die Längsachse des Spreizdübels durch Drehen seines vorderen Längsendes in Bezug auf sein hinteres Längsende um die Längsachse des Spreizdübels gemeint. Das "Tordieren" des oder der Spreizschenkel führt zu der Formung der Spreizschenkel zu der Art Knoten.

Eine Ausgestaltung der Erfindung sieht zwei zweite Spreizschenkel aus Metall vor, die in Umfangsrichtung benachbart angeordnet sind, also ohne, dass ein erster Spreizschenkel aus Kunststoff zwischen ihnen angeordnet ist. Insbesondere liegen sie in Umfangsrichtung aneinander an und berühren sich. Das heißt, diese beiden benachbarten zweiten Spreizschenkel befinden sich an einer Umfangsstelle des Spreizdübels. Dabei kann der Spreizdübel weitere zweite Spreizschenkel an einer oder mehreren weiteren Umfangsstellen, insbesondere bezüglich der Längsachse des Spreizdübels einander gegenüber aufweisen. Zwei aneinander anliegende zweite Spreizschenkel aus Metall weisen im Vergleich mit einem in der Umfangsrichtung dickeren Spreizschenkel den Vorteil auf, dass sie leichter biegbar sind, um sie beispielsweise zur Bildung der Art Knoten leichter tordieren, das heißt um die Längsachse des Spreizdübels drehen beziehungsweise winden zu können.

Die ersten Spreizschenkel aus Kunststoff sind in der Umfangsrichtung des Spreizdübels vorzugsweise zwischen zweiten Spreizschenkeln aus Metall angeordnet. In der Umfangsrichtung des Spreizdübels wechseln erste Spreizschenkel aus Kunststoff und zweite Spreizschenkel aus Metall ab.

Um zu verhindern, dass beim Aufspreizen das Einlegeteil als Gesamtes mit der Schraube mitdreht, was das Aufspreizen behindern würde, ist das Einlegeteil aus Metall zumindest an seinem hinteren Ende drehfest mit einem Grundteil verbunden, an dem der erste Spreizschenkel am Kunststoff ausgebildet ist. Das Grundteil ist insbesondere einstückig mit dem Spreizschenkel aus Kunststoff hergestellt. Insbesondere stützt sich das Einlegeteil in Umfangsrichtung und in Längsrichtung am Grundteil ab. Insbesondere ist das Einlegeteil auch vorne mit dem Grundteil drehfest verbunden und/oder es stützt sich in Längsrichtung an dem Grundteil ab.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiteren Ausführungsbeispiele aufweisen, sind möglich.

Die Erfindung wird nachfolgend anhand von zwei in der Zeichnung dargestellten Ausführungsbeispielen näher erläutert. Es zeigen:
- Figur 1: eine perspektivische Darstellung eines Spreizdübels gemäß der Erfindung;
- Figur 2: einen Achsschnitt des Spreizdübels aus Figur 1;
- Figur 3: ein Blechbiegeteil des Spreizdübels aus den Figuren 1 und 2 in einer perspektivischen Darstellung;
- Figur 4: den Spreizdübel aus den Figuren 1 und 2 in einem aufgespreizten Zustand; und
- Figur 5: eine perspektivische Darstellung eines zweiten Ausführungsbeispiels eines Spreizdübels gemäß der Erfindung.

Grundsätzlich sind in den Figuren gleiche Teile mit gleichen Bezugszahlen versehen.

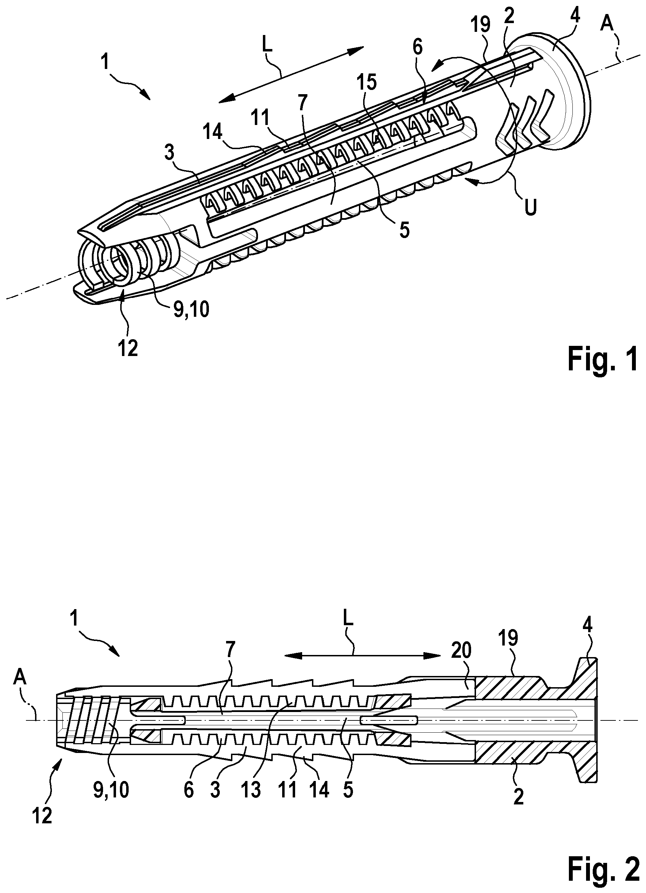

Der in den Figuren 1 und 2 dargestellte, erfindungsgemäße Spreizdübel 1 ist ein Metall-Kunststoff-Spreizdübel 1 mit einem Grundteil 2 aus Kunststoff und einem Einlegeteil 3 aus Metall.

Das Grundteil 2 weist eine Form eines typischen Spreizdübels aus Kunststoff auf: Es weist über einen größten Teil seiner Länge eine Art zylindrische Hüllfläche auf, die sich an einem vorderen Längsende, das dem vorderen Ende des Spreizdübels 1 entspricht, etwas verjüngt. Die Begriffe "vorne" und "hinten" beziehen sich grundsätzlich auf die Einbringrichtung des Spreizdübels 1 in ein nicht dargestelltes Ankerloch. Die "Hüllfläche" ist eine gedachte Umhüllende des Grundteils 2. An einem hinteren Längsende weist das Grundteil 2 eine Endhülse 19 mit einen Radialflansch 4 auf. Das Grundteil 2 ist von hinten bis vorn von einem koaxialen Schraubkanal 5 durchsetzt, der sich an mehreren Stellen von hinten nach vorn kegelstumpfförmig verjüngt. Außerdem weist das Grundteil 2 einen Längsschlitz 6 in einer Axialebene des Grundteils 2 auf, der sich von der Endhülse 19 aus über einen größten Teil einer Länge des Grundteils 2 erstreckt. In dem Längsschlitz 6 ist das Einlegeteil 3 angeordnet, das sich mit seinen hinteren Enden 20 in Längsrichtung L und in Umfangsrichtung U an der Endhülse 19 abstützt.

Der Längsschlitz 6 endet vorn in einem kurzen Abstand von etwa 1 bis 5 mm von dem vorderen Längsende und hinten in einem größeren Abstand von beispielsweise ungefähr 25 mm von dem hinteren Längsende des Grundteils 2 an der Endhülse 19. Der Längsschlitz 6 unterteilt das aus Kunststoff bestehende Grundteil 2 des erfindungsgemäßen Spreizdübels 1 in zwei erste Spreizschenkel 7 aus Kunststoff, die sich in einer Längsrichtung L des Spreizdübels 1 erstrecken. Die beiden ersten Spreizschenkel 7 befinden sich bezüglich einer Längsachse A des Spreizdübels 1, die koaxial durch das Grundteil 2 hindurch verläuft, einander gegenüber. Die Längsrichtung L verläuft axial oder achsparallel zur Längsachse A.

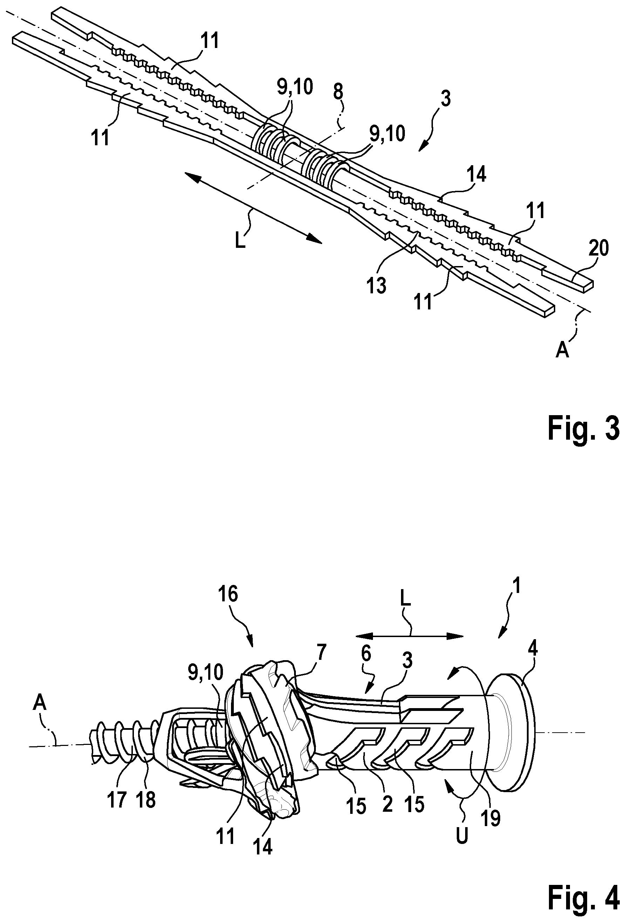

Das in Figur 3 als Einzelteil dargestellte Einlegeteil 3 ist aus einem Blech gestanzt, lasergeschnitten oder in anderer Weise aus dem Blech herausgetrennt. Nicht ausgeschlossen ist eine andere Herstellung des Einlegeteils 3 aus Metall.

Das Einlegeteil 3 weist zwei zueinander parallele Streifen auf, die in einer Ebene des Einlegeteils 3 die an einer schmalsten Stelle ungefähr so breit oder etwas breiter als eine Wanddicke des Grundteils 2 sind, im Bereich eines zweiten Spreizschenkel 11 eine maximale Breite von mehr als der 2-fachen Wanddicke sind. Die Wanddicke entspricht hier der Blechdicke. Beiderseits einer Längsmitte 8 sind die beiden Streifen des Einlegeteils 3 durch einen oder mehrere Stege 9 verbunden, die sich bogenförmig von einem zu einem anderen der beiden parallelen Streifen des Einlegeteils 3 erstrecken. Im dargestellten und beschriebenen Ausführungsbeispiel der Erfindung weist das Einlegeteil 3 auf jeder Seite seiner Längsmitte 8 drei Stege 9 auf, die sich im Ausführungsbeispiel halbkreisbogenförmig von dem einen zu dem anderen Streifen des Einlegeteils 3 erstrecken. Es sind alle Stege 9 zur gleichen Seite der Ebene des Einlegeteils 3 gewölbt und die Stege 9 weisen im Ausführungsbeispiel eine Steigung auf, was allerdings nicht zwingend für die Erfindung ist. Die Stege 9 bilden Schraubeneingriffelemente 10 für eine (nur) in Figur 4 dargestellte Spreizschraube 17, die zu einem Aufspreizen des Spreizdübels 1 in den Schraubkanal 5 schraubbar ist.

Im Ausführungsbeispiel sind in der Längsrichtung L außerhalb der Stege 9 die beiden zueinander parallelen Streifen des Einlegeteils 3 nicht miteinander verbunden.

Das Einlegeteil 3 wird um seine Längsmitte 8 um 180° zusammengebogen derart, dass seine parallelen Streifen aufeinander zu liegen kommen. Dabei werden die beiden Streifen so um 180° um ihre Längsmitten 8 gebogen, dass Längshälften jedes Streifens beiderseits der Längsmitten 8 aneinander zu liegen kommen. Die Längshälften jedes der beiden Streifen des aus Blech, das heißt aus Metall bestehenden Einlegeteils 3 bilden jeweils einen zweiten Spreizschenkel 11 derart, dass der erfindungsgemäße Spreizdübel 1 insgesamt vier zweite Spreizschenkel 11 aus Metall aufweist. Die zweiten Spreizschenkel 11 sind nahe ihren vorderen Längsenden durch die bogenförmigen Stege 9, die die Schraubeneingriffelemente 10 bilden, miteinander verbunden. Es liegen jeweils zwei zweite Spreizschenkel 11 aneinander an und es sind die beiden aneinander anliegenden zweiten Spreizschenkel 11 einander paarweise bezüglich der Längsachse A des erfindungsgemäßen Spreizdübels 1 gegenüber angeordnet.

Einander zugewandte Seiten der aneinander anliegenden zweiten Spreizschenkel 11 befinden sich an der Axialebene des Spreizdübels 1, in der das Grundteil 2 des Spreizdübels 1 den quer durch das Grundteil 2 durchgehenden Längsschlitz 6 für das Einlegeteil 3 aufweist.

Die zweiten Spreizschenkel 11 weisen Rechteckquerschnitte auf, deren Breite radial zur Längsachse A des Spreizdübels 1 sich über ihre Länge durch unten erläuterte, zahnstangenartige Konturen 13 an inneren Längsrändern der zweiten Spreizschenkel 11 und durch ebenfalls unten erläuterte Widerhaken 14 an äußeren Längsrändern der zweiten Spreizschenkel 11 ändert.

Einander zugewandte Seiten der zweiten Spreizschenkel 11 liegen aneinander an.

Anstatt das Einlegeteil 3 in den Längsschlitz 6 des Grundteils 2 einzubringen, also beispielsweise in Längsrichtung von vorne einzuschieben, kann das Einlegeteil 3 bei Ausführungen der Erfindung auch mit dem Grundteil 2 umspritzt sein.

Weil seine Stege 9 halbkreisbogenförmig gebogen und das Einlegeteil 3 um 180° um seine Längsmitte 8 gebogen ist, kann das Einlegeteil 3 auch als Blechbiegeteil aufgefasst werden. Wenn das Einlegeteil 3 durch Stanzen aus dem Blech getrennt ist, kann das Einlegeteil 3 auch als Blechstanz- und -biegeteil aufgefasst werden.

Das Einlegeteil 3 wird derart in den Längsschlitz 6 des aus Kunststoff bestehenden Grundteils 2 des erfindungsgemäßen Spreizdübels 1 eingebracht, dass sich die aus Metall bestehenden zweiten Spreizschenkel 11 in Wandungen des Grundteils 2 beiderseits des Schraubkanals 5 befinden. Die zweiten Spreizschenkel 11 verlaufen parallel zur Längsachse A des Spreizdübels 1 und in gleichen radialen Abständen zur Längsachse A des Spreizdübels 1, das heißt in der Längsrichtung L des Spreizdübels 1.

Die im Ausführungsbeispiel halbkreisbogenförmigen Stege 9 ergänzen sich durch das Biegen des Einlegeteils 3 an seiner Längsmitte 8 um 180° zu Vollkreisen, die um 360° in einer Umfangsrichtung U koaxial um die Längsachse A herum verlaufen. Aufgrund der Steigung der halbkreisbogenförmigen Stege 9 erstecken sich die Stege 9 gewindeartig mehrfach um die Längsachse A beziehungsweise um den Schraubkanal 5 herum. Wie oben beschrieben, bilden die Stege 9 Schraubeneingriffelemente 10 beziehungsweise alle Stege 9 gemeinsam ein Schraubeneingriffelement 10 für die Spreizschraube 17. Die Stege 9 beziehungsweise das/die Schraubeneingriffelement/e 10 befinden sich in einer Aussparung 12 am vorderen Längsende des Grundteils 2 des Spreizdübels 1. Die Aussparung 12 ist am vorderen Längsende des Grundteils 2 und an beiden Seiten des Grundteils 2 in einer um 90° zum Längsschlitz 6, in dem das Einlegeteil 3 beziehungsweise die zweiten Spreizschenkel 11 angeordnet ist beziehungsweise sind, um die Längsachse A des Spreizdübels 1 beziehungsweise seines Grundteils 2 versetzten Axialebene offen.

Die zweiten Spreizschenkel 11 sind in der Umfangsrichtung U zur Längsachse A des Spreizdübels 1 flacher als sie in einer radialen Richtung zur Längsachse A breit sind. Im Ausführungsbeispiel weist das Blech, aus dem das Einlegeteil 3 und damit auch die zweiten Spreizschenkel 11 bestehen, eine Dicke von 0,8 mm auf und die zweiten, aus Metall bestehenden Spreizschenkel 11 sind in der Axialebene des Spreizdübels 1 etwa 2 mm breit derart, dass die zweiten Spreizschenkel 11 radial zur Längsachse A des Spreizdübels 1 mehr als doppelt so breit sind wie sie in der Umfangsrichtung U dick sind.

Allgemein sind die zweiten Spreizschenkel 11 aus Metall radial zur Längsachse A des Spreizdübels 1 mindestens etwa 1,5-mal, insbesondere mindestens etwa 1,7-mal und vorzugsweise mindestens etwa 2-mal so breit wie sie in der Umfangsrichtung U zur Längsachse A des Spreizdübels 1 dick sind.

Dem Schraubkanal 5 zugewandte innere Längsränder der zweiten, aus Metall bestehenden Spreizschenkel 11 weisen zahnstangenartige Konturen 13 auf (siehe Figuren 2 und 3), die für einen Eingriff eines Schraubengewindes 18 der Spreizschraube 17 in den Schraubkanal 5 ragen. Im Ausführungsbeispiel sind die zahnstangenartigen Konturen 13 bezüglich der Längsachse A des Spreizdübels 1 gegenüberliegender zweiter Spreizschenkel 11 jeweils um einen halben Zahn in der Längsrichtung L versetzt, das heißt in der Längsrichtung L des Spreizdübels 1 befinden sich Zähne der zahnstangenartigen Konturen 13 an den inneren Längsrändern der zweiten Spreizschenkel 11 in Höhe von Zahnzwischenräumen der gegenüberliegenden zahnstangenartigen Konturen 13.

Äußere, dem Schraubkanal 5 abgewandte Längsränder der zweiten, aus Metall bestehenden Spreizschenkel 11 weisen sägezahnförmige Widerhaken 14 für einen besseren Halt des Spreizdübels 1 in einem nicht dargestellten Ankerloch auf, die radial nach außen über einen Umfang des Grundteils 2 des Spreizdübels 1 überstehen.

Um einen Widerstand der aus Kunststoff bestehenden ersten Spreizschenkel 7 gegen ein Tordieren, gegebenenfalls auch gegen ein kniehebelartiges Ausknicken oder gegen ein Aufspreizen nach außen zu verringen, weisen die ersten Spreizschenkel 7 Aussparungen 15 nach Art von Senkungen oder Durchbrüchen auf. Mit "Tordieren" ist ein Winden der Spreizschenkel 7, 11 in der Umfangsrichtung U um die Längsachse A des Spreizdübels 1 gemeint, das die Spreizschenkel 7, 11 axial auf einen Bruchteil ihrer Länge verkürzt und zu einer Art Knoten formt (Figur 4).

Zu einer Verankerung in einem nicht dargestellten Ankerloch in einem nicht dargestellten Ankergrund wird der erfindungsgemäße Spreizdübel 1 mit seinem vorderen, sich verjüngenden Längsende voraus in das Ankerloch eingebracht, bis der Radialflansch 4 am hinteren Längsende des Spreizdübels 1 am Ankergrund anliegt. Das Ankerloch ist insbesondere zylindrisch, beispielsweise ist es in den Ankergrund gebohrt. Anschließend wird die Spreizschraube 17, die allgemein auch als stiftförmiges Spreizelement zum Aufspreizen des Spreizdübels 1 aufgefasst werden kann, vom hinteren Längsende her in den Schraubkanal 5 im Grundteil 2 des Spreizdübels 1 eingebracht und eingeschraubt. Beim Einschrauben gelangt das Schraubengewinde 18 der Spreizschaube 17 in Eingriff mit den dem Schaubkanal 5 zugewandten Innenumfangsseiten der ersten, aus Kunststoff bestehenden Spreizschenkel 7, in die sich das Schraubengewinde 18 der Spreizschraube 17 einschneidet, und das Schraubengewinde 18 der Spreizschraube 17 gelangt in Eingriff mit den zahnstangenartigen Konturen 13 an den inneren Längsrändern der zweiten, aus Metall bestehenden Spreizschenkel 11, die bei einem axialen Einziehen der Spreizschraube 17 in den Schraubkanal 5 helfen.

In einem Vollbaustoff wie beispielsweise Beton als Ankergrund spreizt die Spreizschraube 17 die ersten und die zweiten Spreizschenkel 7, 11 auf, das heißt die Spreizschraube 17 drückt die Spreizschenkel 7, 11 nach außen radial weg von der Längsachse A des Spreizdübels 1 und gegen eine Lochwand des nicht dargestellten Ankerlochs. Das Drücken der Spreizschenkel 7, 11 gegen die Lochwand des Ankerlochs bewirkt einen Kraftschluss und gegebenenfalls zusätzlich einen Formschluss der im Ankerloch aufgespreizten ersten und zweiten Spreizschenkel 7, 11 des Spreizdübels 1 mit der Lochwand des Ankerlochs, wodurch der Spreizdübel 1 im Ankerloch verankert ist beziehungsweise wird, das heißt gegen ein Herausziehen im Ankerloch gehalten ist. Die Widerhaken 14 an den äußeren Längsrändern der zweiten Spreizschenkel 11 verbessern den Halt des Spreizdübels 1 im Ankerloch.

Wird der Spreizdübel 1 in ein Ankerloch in einem Hohlbaustoff wie beispielsweise einem Lochziegel als Ankergrund eingebracht und befinden sich die Spreizschenkel 7, 11 in einem Hohlraum des Ankergrunds, zieht die Spreizschraube 17 beim Einschrauben zwischen die das beziehungsweise die Schraubeneingriffelement/e 10 bildenden, bogenförmigen Stege 9 an den vorderen Längsenden der zweiten, aus Metall bestehenden Spreizschenkel 11 axial in Richtung des hinteren Längsendes des Spreizdübels 1, sobald ein Kopf der Spreizschraube 17 (in Figur 4 verdeckt) gegen den Radialflansch drückt. Dabei ist das Einlegeteil 3 aus Metall an seinem hinteren Ende 20 drehfest mit dem Grundteil 2 verbunden, das ein Mitdrehen des gesamten Einlegeteils 3 mit der Spreizschraube 17 verhindert. Zudem stützt sich das Einlegeteil in Längsrichtung L nach hinten an der Endhülse 19 des Grundteils 2 ab. Das bedeutet, dass die vorderen Längsenden der zweiten Spreizschenkel 11 aus Metall in Richtung ihrer hinteren Längsenden 20 bewegt werden. Durch die Drehung der Spreizschraube 17 werden die vorderen Längsenden der zweiten Spreizschenkel 11 um die Spreizschraube 17 herum gedreht, wogegen die hinteren Längsenden 20 der zweiten Spreizschenkel 11 nicht mitdrehen. Dabei werden die ersten und die zweiten Spreizschenkel 7, 11 tordiert, das heißt sie werden um die Spreizschraube 17 und damit um die Längsachse A des Spreizdübels 1 gewunden, wobei sich die Spreizschenkel 7, 11 axial auf einen Bruchteil ihrer ursprünglichen Länge verkürzen und eine Art Knoten 16 bilden, der in Figur 4 dargestellt ist. Der Knoten 16 hintergreift den Hohlraum in dem Hohlbaustoff als Ankergrund und verankert dadurch den Spreizdübel 1 durch Formschluss in dem Hohlraum im Hohlbaustoff. Zusätzlich besteht ein Kraftschluss durch das Aufspreizen der Spreizschenkel 7, 11 außerhalb des Hohlraums beispielsweise in Stegen des Hohlbaustoffs.

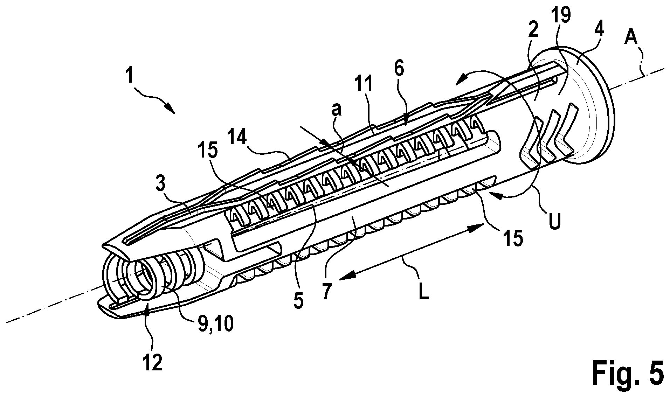

Das in Figur 5 dargestellte zweite Ausführungsbeispiel eines erfindungsgemäßen Spreizdübels 1 unterscheidet sich von dem in Figuren 1 und 2 dargestellten erfindungsgemäßen Spreizdübel 1 dadurch, dass die zweiten, aus Metall bestehenden Spreizschenkel 11 in einem Längsmittelabschnitt nicht aneinander anliegen, sondern einen Abstand a in der Umfangsrichtung U zur Längsachse A des Spreizdübels 1 aufweisen. Die zweiten Spreizschenkel 11 sind somit auch benachbart. Der Abstand a beträgt beispielsweise etwa einen oder mehrere Millimeter. Der Längsmittelabschnitt, in dem die zweiten Spreizschenkel 11 den Abstand a in der Umfangsrichtung U voneinander aufweisen, erstreckt sich beispielsweise über etwa 70 % bis 80 % einer Gesamtlänge des Spreizschenkel 11. In an die Längsenden anschließenden Längsendabschnitten liegen die zweiten Spreizschenkel 11 im Ausführungsbeispiel aneinander an.

Im Übrigen ist der in Figur 5 dargestellte, erfindungsgemäße Spreizdübel 1 gleich ausgebildet, wie der in den Figuren 1, 2 und 4 dargestellte Spreizdübel 1, so dass zur Vermeidung von Wiederholungen zur Erläuterung des in Figur 5 dargestellten Spreizdübels 1 ergänzend auf die Erläuterungen der Figuren 1 bis 4 verwiesen werden kann.

### Bezugszeichenliste

### Spreizdübel

- A: Längsachse
- L: Längsrichtung
- U: Umfangsrichtung
- a: Abstand
- 1: Spreizdübel
- 2: Grundteil
- 3: Einlegeteil
- 4: Radialflansch
- 5: Schraubkanal
- 6: Längsschlitz
- 7: erster Spreizschenkel
- 8: Längsmitte des Einlegeteils 3
- 9: Steg
- 10: Schraubeneingriffelement
- 11: zweiter Spreizschenkel
- 12: Aussparung
- 13: zahnstangenartige Kontur
- 14: Widerhaken
- 15: Aussparung
- 16: Knoten
- 17: Spreizschraube
- 18: Schraubengewinde
- 19: Endhülse des Grundteils 2
- 20: hinteres Ende des Einlegeteils 3 beziehungsweise eines zweiten Spreizschenkels 11

## Patentansprüche

1. Spreizdübel (1), mit einer Längsachse (A), mit mindestens einem sich in einer Längsrichtung (L) des Spreizdübels (1) erstreckenden ersten Spreizschenkel (7) aus Kunststoff, und mit mindestens einem sich in der Längsrichtung (L) des Spreizdübels (1) erstreckenden zweiten Spreizschenkel (11) aus Metall, wobei der mindestens eine erste Spreizschenkel (7) und der mindestens eine zweite Spreizschenkel (11) durch Einbringen eines vorzugsweise stiftförmigen Spreizelements entlang der Längsachse (A) in den Spreizdübel (1) nach außen, insbesondere radial zu der Längsachse (A) bewegbar sind, **dadurch gekennzeichnet, dass** der zweite Spreizschenkel (11) in einer Umfangsrichtung (U) zur Längsachse (A) des Spreizdübels (1) flacher als in radialer Richtung zur Längsachse (A) des Spreizdübels (1) breit ist.

2. Spreizdübel (1) nach Anspruch 1, **dadurch gekennzeichnet, dass** der mindestens eine zweite Spreizschenkel (11) in der radialen Richtung zur Längsachse (A) des Spreizdübels (1) mindestens 1,5-mal, insbesondere mindestens 1,7-mal und vorzugsweise mindestens 2-mal so breit wie in der Umfangsrichtung (U) zur Längsachse (A) des Spreizdübels (1) dick ist.

3. Spreizdübel (1) nach Anspruch 1 oder 2, **dadurch gekennzeichnet, dass** an einem vorderen Längsende des zweiten Spreizschenkels (11) ein Schraubeneingriffelement (10) für einen Eingriff eines Schraubengewindes (18) einer entlang der Längsachse (A) des Spreizdübels (1) in den Spreizdübel (1) eingebrachten Spreizschraube (17) als stiftförmiges Spreizelement angeordnet ist.

4. Spreizdübel (1) nach einem oder mehreren der Ansprüche 1 bis 3, **dadurch gekennzeichnet, dass** der Spreizdübel (1) mindestens zwei zweite Spreizschenkel (11) aus Metall aufweist, und dass vordere Längsenden und/oder hintere Längsenden der beiden zweiten Spreizschenkel (11) verbunden sind.

5. Spreizdübel (1) nach Anspruch 4, **dadurch gekennzeichnet, dass** die vorderen Längsenden der zweiten Spreizschenkel (11) durch das Schraubeneingriffelement (10) miteinander verbunden sind.

6. Spreizdübel (1) nach Anspruch 4 oder 5, **dadurch gekennzeichnet, dass** die vorderen Längsenden der zweiten Spreizschenkel (11) durch Stege (9) verbunden sind, die sich bogenförmig um die Längsachse (A) des Spreizdübels (1) herum erstrecken und die das Schraubeneingriffelement (10) bilden.

7. Spreizdübel (1) nach einem oder mehreren der vorhergehenden Ansprüche, **dadurch gekennzeichnet, dass** der Spreizdübel (1) ein Blechbiegeteil aufweist, das den mindestens einen zweiten Spreizschenkel (11) aufweist.

8. Spreizdübel (1) nach einem oder mehreren der vorhergehenden Ansprüche, **dadurch gekennzeichnet, dass** der mindestens eine zweite Spreizschenkel (11) Widerhaken (14) an seinem radial äußeren Längsrand aufweist.

9. Spreizdübel (1) nach einem oder mehreren der vorhergehenden Ansprüche, **dadurch gekennzeichnet, dass** ein radial innerer Längsrand des mindestens einen zweiten Spreizschenkels (11) aus Metall eine zahnstangenartige Kontur (13) für einen Eingriff mit dem Schraubengewinde (18) der Spreizschraube (17) aufweist.

10. Spreizdübel (1) nach einem oder mehreren der vorhergehenden Ansprüche, **dadurch gekennzeichnet, dass** der mindestens eine erste Spreizschenkel (7) Aussparungen (15) aufweist, die eine Steifigkeit des mindestens einen ersten Spreizschenkels (7) gegen das Aufspreizen, gegen ein Ausknicken und oder gegen ein Tordieren verringert.

11. Spreizdübel (1) nach einem oder mehreren der vorhergehenden Ansprüche, **dadurch gekennzeichnet, dass** der Spreizdübel (1) zwei zweite Spreizschenkel (11) aus Metall aufweist, die in Umfangsrichtung (U) benachbart angeordnet sind, insbesondere liegen sie in Umfangsrichtung (U) aneinander an.

12. Spreizdübel (1) nach einem oder mehreren der vorhergehenden Ansprüche, **dadurch gekennzeichnet, dass** der Spreizdübel (1) genau zwei erste Spreizschenkel (7) aus Kunststoff und/oder genau zwei zweite Spreizschenkel (11) aus Metall aufweist, die einander in Bezug auf die Längsachse (L) des Spreizdübels (1) gegenüber liegen.

13. Spreizdübel (1) nach einem oder mehreren der vorhergehenden Ansprüche, **dadurch gekennzeichnet, dass** die ersten Spreizschenkel (7) aus Kunststoff in der Umfangsrichtung (U) des Spreizdübels (1) zwischen den zweiten Spreizschenkeln (11) aus Metall angeordnet sind.

14. Spreizdübel (1) nach einem oder mehreren der vorhergehenden Ansprüche, **dadurch gekennzeichnet, dass** der zweite Spreizschenkel (11) aus Metall zumindest an seinem hinteren Ende (20) drehfest mit einem Grundteil (2) verbunden ist, an dem der erste Spreizschenkel (7) am Kunststoff ausgebildet ist.

## Claims

1. Expansion dowel (1), having a longitudinal axis (A), having at least one first expansion leg (7) made of plastic extending in a longitudinal direction (L) of the expansion dowel (1), and having at least one second expansion leg (11) made of metal extending in the longitudinal direction (L) of the expansion dowel (1), wherein the at least one first expansion leg (7) and the at least one second expansion leg (11) are movable outward, in particular radially relative to the longitudinal axis (A), by introducing a preferably pin-shaped expansion element along the longitudinal axis (A) into the expansion dowel (1), **characterized in that** the second expansion leg (11) is flatter in a circumferential direction (U) relative to the longitudinal axis (A) of the expansion dowel (1) than it is wide in the radial direction relative to the longitudinal axis (A) of the expansion dowel (1).

2. Expansion dowel (1) according to claim 1, **characterized in that** the at least one second expansion leg (11) is at least 1.5 times, in particular at least 1.7 times, and preferably at least 2 times as wide in the radial direction relative to the longitudinal axis (A) of the expansion dowel (1) as it is thick in the circumferential direction (U) relative to the longitudinal axis (A) of the expansion dowel (1).

3. Expansion dowel (1) according to claim 1 or 2, **characterized in that** a screw engagement element (10) for engagement of a screw thread (18) of an expansion screw (17) introduced along the longitudinal axis (A) of the expansion dowel (1) into the expansion dowel (1) as a pin-shaped expansion element is arranged at a front longitudinal end of the second expansion leg (11).

4. Expansion dowel (1) according to one or more of claims 1 to 3, **characterized in that** the expansion dowel (1) has at least two second expansion legs (11) made of metal, and that front longitudinal ends and/or rear longitudinal ends of the two second expansion legs (11) are connected.

5. Expansion dowel (1) according to claim 4, **characterized in that** the front longitudinal ends of the second expansion legs (11) are connected to one another by the screw engagement element (10).

6. Expansion dowel (1) according to claim 4 or 5, **characterized in that** the front longitudinal ends of the second expansion legs (11) are connected by webs (9) which extend in an arc shape around the longitudinal axis (A) of the expansion dowel (1) and which form the screw engagement element (10).

7. Expansion dowel (1) according to one or more of the preceding claims, **characterized in that** the expansion dowel (1) has a bent sheet metal part which has the at least one second expansion leg (11).

8. Expansion dowel (1) according to one or more of the preceding claims, **characterized in that** the at least one second expansion leg (11) has barbs (14) on its radially outer longitudinal edge.

9. Expansion dowel (1) according to one or more of the preceding claims, **characterized in that** a radially inner longitudinal edge of the at least one second expansion leg (11) made of metal has a rack-like contour (13) for engagement with the screw thread (18) of the expansion screw (17).

10. Expansion dowel (1) according to one or more of the preceding claims, **characterized in that** the at least one first expansion leg (7) has recesses (15) which reduce a stiffness of the at least one first expansion leg (7) against expansion, against buckling, and/or against torsion.

11. Expansion dowel (1) according to one or more of the preceding claims, **characterized in that** the expansion dowel (1) has two second expansion legs (11) made of metal which are arranged adjacently in the circumferential direction (U), in particular they abut one another in the circumferential direction (U).

12. Expansion dowel (1) according to one or more of the preceding claims, **characterized in that** the expansion dowel (1) has exactly two first expansion legs (7) made of plastic and/or exactly two second expansion legs (11) made of metal which are opposite one another with respect to the longitudinal axis (L) of the expansion dowel (1).

13. Expansion dowel (1) according to one or more of the preceding claims, **characterized in that** the first expansion legs (7) made of plastic are arranged in the circumferential direction (U) of the expansion dowel (1) between the second expansion legs (11) made of metal.

14. Expansion dowel (1) according to one or more of the preceding claims, **characterized in that** the second expansion leg (11) made of metal is connected in a rotationally fixed manner at least at its rear end (20) to a base part (2) on which the first expansion leg (7) made of plastic is formed.

## Revendications

1. Cheville expansible (1), comportant un axe longitudinal (A), au moins une première branche d'expansion (7) en matière plastique s'étendant dans une direction longitudinale (L) de la cheville expansible (1), et au moins une deuxième branche d'expansion (11) en métal s'étendant dans la direction longitudinale (L) de la cheville expansible (1), la au moins une première branche d'expansion (7) et la au moins une deuxième branche d'expansion (11) étant déplaçables vers l'extérieur, en particulier radialement par rapport à l'axe longitudinal (A), par introduction d'un élément d'expansion de préférence en forme de tige le long de l'axe longitudinal (A) dans la cheville expansible (1), **caractérisée en ce que** la deuxième branche d'expansion (11) est plus plate dans une direction circonférentielle (U) par rapport à l'axe longitudinal (A) de la cheville expansible (1) qu'elle n'est large dans la direction radiale par rapport à l'axe longitudinal (A) de la cheville expansible (1).

2. Cheville expansible (1) selon la revendication 1, **caractérisée en ce que** la au moins une deuxième branche d'expansion (11) est au moins 1,5 fois, en particulier au moins 1,7 fois et de préférence au moins 2 fois aussi large dans la direction radiale par rapport à l'axe longitudinal (A) de la cheville expansible (1) qu'elle n'est épaisse dans la direction circonférentielle (U) par rapport à l'axe longitudinal (A) de la cheville expansible (1).

3. Cheville expansible (1) selon la revendication 1 ou 2, **caractérisée en ce qu'un** élément de prise de vis (10) pour une mise en prise d'un filetage de vis (18) d'une vis d'expansion (17) introduite en tant qu'élément d'expansion en forme de tige le long de l'axe longitudinal (A) de la cheville expansible (1) dans la cheville expansible (1) est disposé à une extrémité longitudinale avant de la deuxième branche d'expansion (11).

4. Cheville expansible (1) selon une ou plusieurs des revendications 1 à 3, **caractérisée en ce que** la cheville expansible (1) comporte au moins deux deuxièmes branches d'expansion (11) en métal, et **en ce que** des extrémités longitudinales avant et/ou des extrémités longitudinales arrière des deux deuxièmes branches d'expansion (11) sont reliées.

5. Cheville expansible (1) selon la revendication 4, **caractérisée en ce que** les extrémités longitudinales avant des deuxièmes branches d'expansion (11) sont reliées entre elles par l'élément de prise de vis (10).

6. Cheville expansible (1) selon la revendication 4 ou 5, **caractérisée en ce que** les extrémités longitudinales avant des deuxièmes branches d'expansion (11) sont reliées par des ponts (9) qui s'étendent en forme d'arc autour de l'axe longitudinal (A) de la cheville expansible (1) et qui forment l'élément de prise de vis (10).

7. Cheville expansible (1) selon une ou plusieurs des revendications précédentes, **caractérisée en ce que** la cheville expansible (1) comporte une pièce en tôle pliée qui comporte la au moins une deuxième branche d'expansion (11).

8. Cheville expansible (1) selon une ou plusieurs des revendications précédentes, **caractérisée en ce que** la au moins une deuxième branche d'expansion (11) comporte des crochets de retenue (14) sur son bord longitudinal radialement extérieur.

9. Cheville expansible (1) selon une ou plusieurs des revendications précédentes, **caractérisée en ce qu'un** bord longitudinal radialement intérieur de la au moins une deuxième branche d'expansion (11) en métal comporte un contour en forme de crémaillère (13) pour une mise en prise avec le filetage de vis (18) de la vis d'expansion (17).

10. Cheville expansible (1) selon une ou plusieurs des revendications précédentes, **caractérisée en ce que** la au moins une première branche d'expansion (7) comporte des évidements (15) qui réduisent une rigidité de la au moins une première branche d'expansion (7) à l'encontre de l'expansion, à l'encontre d'un flambage et/ou à l'encontre d'une torsion.

11. Cheville expansible (1) selon une ou plusieurs des revendications précédentes, **caractérisée en ce que** la cheville expansible (1) comporte deux deuxièmes branches d'expansion (11) en métal qui sont disposées de manière adjacente dans la direction circonférentielle (U), en particulier elles sont en appui l'une contre l'autre dans la direction circonférentielle (U).

12. Cheville expansible (1) selon une ou plusieurs des revendications précédentes, **caractérisée en ce que** la cheville expansible (1) comporte exactement deux premières branches d'expansion (7) en matière plastique et/ou exactement deux deuxièmes branches d'expansion (11) en métal qui sont opposées l'une à l'autre par rapport à l'axe longitudinal (L) de la cheville expansible (1).

13. Cheville expansible (1) selon une ou plusieurs des revendications précédentes, **caractérisée en ce que** les premières branches d'expansion (7) en matière plastique sont disposées dans la direction circonférentielle (U) de la cheville expansible (1) entre les deuxièmes branches d'expansion (11) en métal.

14. Cheville expansible (1) selon une ou plusieurs des revendications précédentes, **caractérisée en ce que** la deuxième branche d'expansion (11) en métal est reliée de manière solidaire en rotation au moins à son extrémité arrière (20) à un corps de base (2) sur lequel la première branche d'expansion (7) en matière plastique est formée.
